# EUROPÄISCHE PATENTSCHRIFT

(11) **EP 0 480 393 B1**
(45) Veröffentlichungstag und Bekanntmachung des Hinweises auf die Patenterteilung: **27.12.1995**
(21) Anmeldenummer: 91117185.8
(22) Anmeldetag: 09.10.1991
(51) Int. Cl.: F02D 9/16, F02M 35/10

(54) **Brennkraftmaschine mit einem zylindrischen Schieber**
Combustion engine with a cylindrical slider
Moteur à combustion avec une vanne cylindrique

(30) Priorität: 11.10.1990 DE 4032250
(43) Veröffentlichungstag der Anmeldung: 15.04.1992
(73) Patentinhaber: Willeke, Wolfram, D-42899 Remscheid (DE)
(72) Erfinder: Willeke, Wolfram, D-42899 Remscheid (DE)
(74) Vertreter: Pollmeier, Felix, Dipl.-Ing.

(56) Entgegenhaltungen:
- DE-A- 3 936 263
- GB-A- 1 540 557
- GB-A- 2 165 886
- GB-A- 2 211 889

## Beschreibung

Die Erfindung betrifft eine Brennkraftmaschine nach dem Oberbegriff des Patentanspruchs 1.

Eine Brennkraftmaschine mit einem Schieber dieser Art ist durch die GB 2 211 889 A bekanntgeworden. Mit den dort als Langlöcher ausgebildeten, außermittigen Queröffnungen des zylindrischen Schiebers soll ein in allen - vom Leerlauf bis zur Vollast reichenden - Betriebszuständen einer Brennkraftmaschine optimales Luft-Kraftstoff-Verhältnis erreicht werden, wozu es neben anderen Faktoren wesentlich auf die Menge des zugeführten Kraftstoffs, die Menge der den Zylindern zuströmenden Luft und die dabei auftretenden Strömungsverhältnisse ankommt. Allerdings läßt sich bei dem bekannten Schieber ein Durchbiegen, vor allem bei Unterdruck, nicht vermeiden, denn die bei jedem Druckwechsel - bei Unterdruck verschließt der Schieber den Öffnungsquerschnitt - auftretenden Kräfte sind außerordentlich groß. Das Durchbiegen kann dazu führen, daß sich der Schieber nicht mehr verstellen läßt, denn aufgrund des dann unvermeidlich den Spalt zwischen dem Schieber und dem Gehäuse ausfüllenden Kraftstoffnebels würde ein Adhäsionseffekt eintreten; dieser geht erst zurück, wenn der Unterdruck nachläßt und die Biegung zurückgeht.

Vor allem für im Rennsport eingesetzte Motoren ist es daher bekannt, jeder Zylinderreihe einen Flachschieber zuzuordnen, wie zum Beispiel durch die Zeitschrift "rallye racing", Heft 5 vom 3.7.1990 (vgl. die Seiten 31 sowie 56 und 57) für einen Acht- und einen Zwölfzylinder-Motor bekanntgeworden. Die Flachschieber sind zwischen den am Zylinderkopf angeflanschten Saugrohren und den Ansaugtrichtern angeordnet. Als nachteilig hat sich bei den Flachschiebern, insbesondere deren große Bauhöhe in vertikaler Ebene zur Strömungsrichtung und die damit unvermeidlich steile Einbaulage der Einspritzdüsen herausgestellt, die sich nicht an beliebiger Stelle und mit einem optimalen Einspritzwinkel einbauen lassen. Außerdem benötigt ein Flachschieber mehr Einzelteile, was insbesondere auch auf die zum Übertragen der Stellbewegungen des Flachschiebers erforderlichen Bauteile zurückzuführen ist; schließlich ergeben sich insbesondere in den Zwischenstellungen des Schiebers, d.h. bei nicht völlig freiem Öffnungsquerschnitt der Saugkanäle unerwünscht große Strömungswiderstände.

Der Erfindung liegt die Aufgabe zugrunde, für eine gattungsgemäße Brennkraftmaschine einen Schieber mit verbessertem Betriebsverhalten zu schaffen.

Diese Aufgabe wird erfindungsgemäß durch die Merkmale des Patentanspruchs 1 gelöst. Mit diesen verblüffenden Maßnahmen ergibt sich, wie zahlreiche Versuche bestätigt haben, einerseits ein erheblich verringerter Strömungswiderstand in den Teillastzuständen. Denn der Schieber, der vorzugsweise in einem korrespondierenden, bezogen auf die Längsachse zumindest eine außermittige Durchlaßöffnung aufweisenden, am Zylinderkopf angeflanschten Gehäuse, alternativ - wie insbesondere beim Motor eines Zweikraftrades - im Zylinderkopf angeordnet sein kann, tritt lediglich mit der nicht durchbrochenen Schieberfläche bzw. deren in Drehrichtung voreilenden Kante und mit an der durchbrochenen Mantelseite lediglich übrigbleibenden Nasen in den Öffnungsquerschnitt des Saugkanals ein. Je größer das Verhältnis von Länge zu Breite der Langlöcher ist, desto kleiner werden die Nasen, so daß sich bei entsprechender Auslegung ein weiter verbesserter Strömungsverlauf erreichen läßt, ohne den äußerst günstigen ovalen Durchlaßquerschnitt wesentlich zu verändern. Während in der voll geöffneten Stellung des Schiebers ein glatter, ungehinderter, freier Durchgang entweder von den Ansaugtrichtern zu den Saugrohren oder - bei Anordnung des zylindrischen Schiebers im Zylinderkopf selbst - im Saugkanal vor dem Brennraum der Zylinder vorliegt, ragt in den Zwischenstellungen des Schiebers die nicht durchbrochene Schieberfläche mit einer Schräglage in den Saugkanal-Querschnitt hinein; es ergibt sich damit ein von der schrägstehenden Schieberfläche gezielt geleitetes Strömungsverhalten der Luft, die besser in das Saugrohr oder in den Brennraum des Zylinders einströmen kann. Vor allem bei einem mit Langlöchern - alternativ könnten die Queröffnungen auch als zylindrische Bohrungen ausgebildet werden - versehenen Schieber ergibt sich gegenüber einem Flachschieber einerseits ein ausreichend großer Öffnungsquerschnitt und andererseits in vertikaler Ebene eine sehr viel geringere Bauhöhe; um nämlich einen gleichgroßen Öffnungsguerschnitt zu haben, müßte der Flachschieber die Baugröße zwangsläufig erhöhende, große runde Öffnungen erhalten. Hingegen würden Langlöcher bei einem Flachschieber zu unangemessen großen Schieberlängen führen, denn der Abstand zwischen jeweils zwei Öffnungen müßte mindestens der Länge des Langlochs entsprechen. Andererseits verhindert die mehrfache Lagerung des mit den Queröffnungen versehenen Schiebers eine Durchbiegung und damit ein zur Funktionsunfähigkeit führendes Klemmen des Drehschiebers auch bei auftretenden hohen Kräften, wie insbesondere bei Unterdruck.

Es wird vorgeschlagen, daß ein Einzelgehäuse mit Schieber direkt vor dem Zylinderkopf angeordnet ist. Unter einem Einzelgehäuse wird hierbei ein solches Gehäuse verstanden, das einen Schieber mit lediglich einer Queröffnung aufnimmt und einem einzelnen Zylinder zugeordnet ist. Jedes Einzelgehäuse kann mit einem Anschlag für Vollast und Leerlauf versehen sein. Gleichwohl ist es möglich, bei einem in einer Reihe mehrere Zylinder aufweisenden Motor entsprechend viele Einzelgehäuse mit jeweils einem Schieber vorzusehen; die Schieber sind in diesem Fall durch Kupplungen miteinander verbunden. Mehrere aneinandergereihte Einzelgehäuse haben neben der erreichten Gewichtsersparnis weiterhin den Vorteil, daß eine variable Anpassung an beliebige Zylinderabstände möglich ist; die zwischen den Einzelgehäusen die Zapfen benachbarter Schieber miteinander verbindende Kupplung überbrückt dann den Abstand zwischen zwei Einzelgehäusen.

Wenn der Mantel des Schiebers entsprechend der Länge des geraden Abschnitts der Langlöcher offen ist, lassen sich durchgängig Saugkanäle mit ovalem Querschnitt erreichen, die sich insbesondere für Vier- oder Fünf-Ventilzylinder-Motoren anbieten, die im Zylinderkopf Kanäle in Ovalform besitzen.

Bei einem Schieber mit Langlöchern als Queröffnungen kann der Schiebermantel auf der gesamten Länge der Langlöcher offen sein. Es entsteht damit eine Art Tunnelkanal, d.h. die die Strömungsverhältnisse inbesondere bei einer Ovalform der Kanäle begünstigenden Nasen sind in diesem Fall gekappt, und der Strömungs- bzw. Durchlaßquerschnitt in diesem Bereich ist etwa rechtwinklig; dieser in der Herstellung einfache Durchlaßquerschnitt eignet sich vor allem für Serienmotoren.

Dadurch, daß der Schieber mit taschenartigen Vertiefungen versehen ist, läßt sich ein ansonsten bei Unterdruck nachteiliger Adhäsionseffekt vermeiden. Dies bewirken die in dem Mantel des Schiebers, z.B. eingefrästen, konkaven, flächenartigen Vertiefungen, die in der Mantelfläche verteilt so angeordnet sind, daß sie das ansonsten enge Laufspiel zwischen dem Schieber und dem Gehäuse nicht beeinträchtigen.

Zum Betätigen des Schiebers läßt sich vorteilhaft eine mit einem Endzapfen des Schiebers verbundene Kurvenscheibe an den Gaszug anschließen. Somit ergibt sich eine wenig aufwendige Betätigung, da sich die über den Gaszug eingeleitete Verstellbewegung ohne zusätzliche Betätigung eines Zwichengliedes als Drehbewegung direkt auf den Schieber übertragen läßt.

Nach einer Ausgestaltung der Erfindung wird vorgeschlagen, daß der Schieber hinter den Zylinder-Auslaßkanälen angeordnet ist. Der Schieber befindet sich in diesem Fall nicht mehr in der Luftzuführung, sondern läßt sich beispielsweise zur Abgasregelung einsetzen und kann somit bekannte, je nach ihrer Lage das Drehmoment oder die Leistung des Motors beeinflussende Klappen ersetzen. Für das Fahrverhalten eines Fahrzeugs mit Abgasregelung bringt es große Vorteile, wenn die geregelte Abgasmenge exakt dosiert wird. Der Schieber läßt sich zum Beispiel entweder im Auspuffkrümmer oder auslaßseitig im Zylinderkopf anordnen.

Vorteilhaft läßt sich eine Lagerung an der Verbindungsstelle zweier Schieberteile vorsehen. Hierbei lassen sich die einander zugewandten Zapfen der Schieberteile als Halbzapfen ausbilden, die dann nach dem Übereinanderschieben ihrer Abflachungen einen zylindrischen Bund für das Lager bieten, dessen Durchmesser den endseitigen Lagerzapfen des Schiebers entspricht. Aufgrund der Mehrteiligkeit können somit Lager montiert und angeordnet werden, deren Außendurchmesser den endseitigen Lagern und damit dem Durchmesser des Schiebers entspricht. Schließlich kann an der Verbindungs- und Lagerstelle auch gleichzeitig die in das eine Schieberteil eingeleitete Drehbewegung auf das andere Schieberteil übertragen werden, beispielsweise durch Schultern an den Enden der Schieberteile, gegen die sich die Halbzapfen anlegen.

Wenn die Lager vorteilhaft aus Kunststoff bestehen, läßt sich eine gewichtssparende Lagerung des Schiebers im Gehäuse oder im Zylinderkopf erreichen. Eine weitere, erhebliche Gewichtsersparnis ergibt sich, wenn vorteilhaft der Schieber und das Gehäuse aus Kunststoff-Spritzguß, Magnesium-Spritzguß oder Kohlefaser hergestellt sind.

Vorteilhaft läßt sich ein Ende des Schiebers, und zwar das von der Kurvenscheibe entfernte, mit einem Drehpotentiometer versehen. Das Potentiometer benötigt keine zwischengeschalteten Bewegungsteile, wie beim Flachschieber, und nimmt somit die für die nach der Schieberstellung elektronisch geregelten Einspritzwerte maßgebliche, jeweilige Schieberstellung spielfrei ab. Das Potentiometer steht stets an der gleichen Stelle wie der Schieber.

Nach einer Ausgestaltung der Erfindung lassen sich die sich dem Schieber anschließenden Saugrohre in horizontaler Ebene durch eine Mittenwand unterteilen und auf diese Weise ein Schaltsaugrohr erreichen. Um ein besseres Drehmoment-Leistungsverhältnis zu ermöglichen, verschließt der Schieber in der Ausgangslage den einen der beiden Kanäle, und nur jeweils der andere Kanal ist stets offen. Aus dieser Ausgangslage wird der Schieber bzw. der Öffnungswinkel - elektronisch gesteuert - nur ab einer bestimmten Drehzahl (α/n-Regelung) betätigt; er macht dann auch den bis dahin geschlossenen Kanal - zumindest teilweise - auf, so daß sich bei höheren Drehzahlen mehr Füllung ergibt. Wenn dabei die Mittenwand um ihre Längsachse gedrallt und ihre von dem Schieber entfernte Stirnwand gegenüber der schieberseitigen Stirnwand um 90° gedreht ist, mündet die Mittenwand exakt zwischen den beiden im Zylinder nebeneinanderliegenden Ventilen. Außerdem ergibt sich quasi ein Drallkanal, der für eine gezielte Luftströmung sorgt.

Die Erfindung wird nachfolgend anhand von in der Zeichnung dargestellten Ausführungsbeispielen näher erläutert. Es zeigen:
- Fig. 1: in einer Gesamtansicht einen in ein - teilweise geschnitten dargestelltes - Gehäuse eingesetzten zylindrischen Schieber;
- Fig. 2: das Gehäuse gemäß Fig. 1 in der Draufsicht;
- Fig. 3: als Einzelheit das in Fig. 1 rechte Schieberteil des dargestellten zweiteiligen Schiebers;
- Fig. 4: im Querschnitt die Einbaulage des zwischen Saugtrichtern und Saugrohren angeordneten, über die Saugrohre am Zylinderkopf einer Brennkraftmaschine angeflanschten Schiebergehäuses gemäß Fig. 1, teilweise schematisch dargestellt;
- Fig. 5: als Einzelheit den einem durch eine horizontale Mittenwand unterteilten Saugrohr vorgeschalteten Schieber gemäß Fig. 1, schematisch dargestellt;
- Fig. 6: als Einzelheit in der Längsansicht ein Schieberteil mit tunnelartigen Queröffnungen;
- Fig. 7: in der Längsansicht einen Schieber mit lediglich einer Queröffnung;
- Fig. 8: in der Draufsicht ein einen Schieber gemäß Fig. 1 aufnehmendes Einzelgehäuse;
- Fig. 9: als Einzelheit einen Halter für ein Drehpotentiometer; und
- Fig. 10: eine aus vier Einzelgehäusen nach Fig. 8 zusammengesetzte Walzenschieberanlage für eine vier Zylinder aufweisende Zylinderreihe.

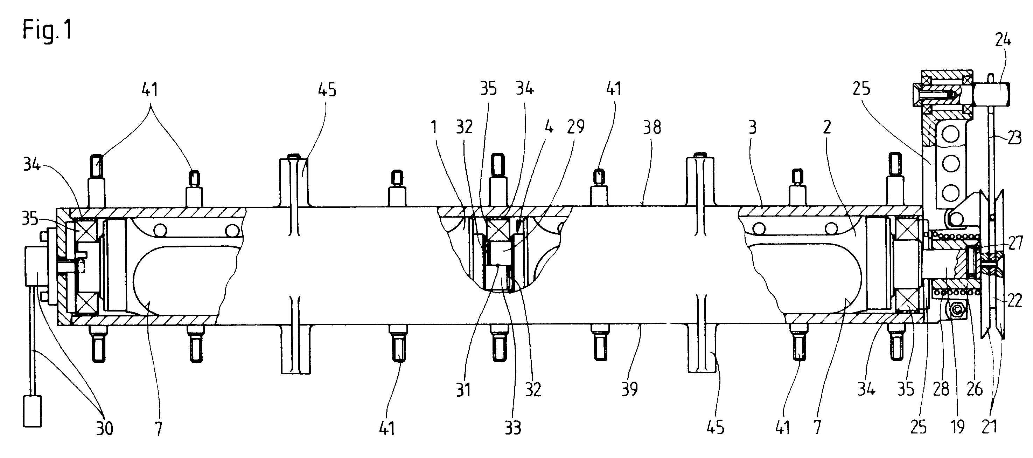

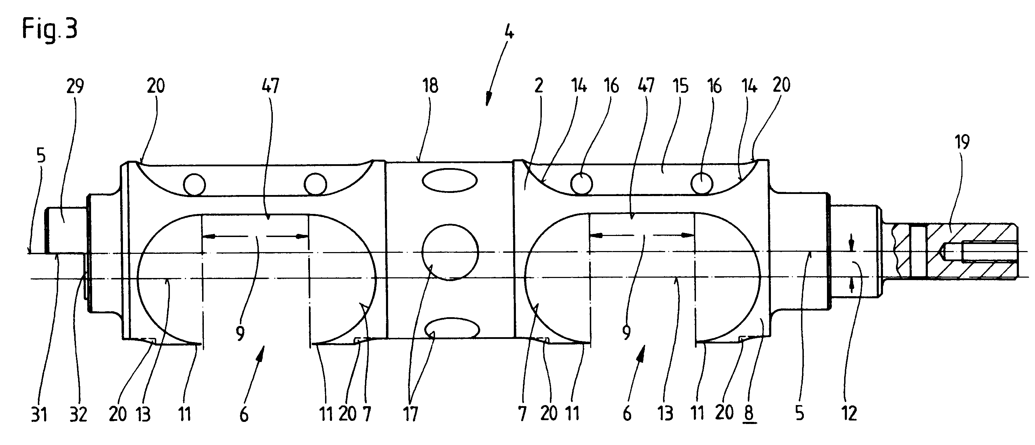

Von einem gemäß Fig. 1 aus zwei Schieberteilen 1, 2 bestehenden, in einem im Querschnitt rechteckigen Gehäuse 3 angeordneten zylindrischen Schieber 4 ist in Fig. 3 als Einzelheit das rechte Schieberteil 2 dargestellt. Das Schieberteil 2 weist zwei quer zu seiner Längsachse 5 angeordnete und bezogen auf die Längsachse 5 außermittige Queröffnungen 6 auf, die als Langlöcher 7 ausgebildet sind. Der Mantel 8 des Schieberteils 2 ist an der von der außermittigen Öffnungsachse 13 weniger entfernten Seite entsprechend der Länge des geraden Abschnitts 9 der Langlöcher 7 offen, so daß an dieser Seite des Mantels 8 lediglich stegartige, der besseren Luftführung dienende Nasen 11 übrigbleiben und einander mit Abstand gegenüberliegen.

Die Langlöcher 7 sind bezogen auf die Längsachse 5 um das Versatzmaß 12 außermittig angeordnet. Der oberhalb des geraden Abschnitts 9 der Langlöcher 7 liegende, von der außermittigen Öffnungsachse 13 der Langlöcher 7 weiter entfernte Mantelabschnitt ist zur Gewichtsersparnis mit - ohne allerdings den Mantel 8 zu durchdringen - aus dem vollen Material herausgearbeiteten Mantel-Ausnehmungen 14 versehen; es bleibt dort lediglich noch ein axialer Steg 15, der mit gewichtssparenden Bohrungen 16 versehen ist. Der Gewichtsersparnis dienende, sternartig nach innen verlaufende Radialbohrungen 17 sind außerdem jeweils in den Vollmaterial-Ringabschnitten 18 des Schiebers 4 bzw. der Schieberteile 1, 2 zwischen zwei Langlöchern 7 vorhanden. Um einen Adhäsionseffekt zwischen dem Schieber 4 und dem Gehäuse 3 zu verhindern, besitzt der Mantel 8 - und auch die Stege 15 sind tiefergelegt - als taschenartige Vertiefungen 20 ausgebildete, freigefräste Flächen, ohne daß diese allerdings das um die Schieberkontur herum ansonsten enge Laufspiel zum Gehäuse 3 beeinträchtigen.

An seinem in Fig. 3 rechten Ende besitzt das Schieberteil 2 einen Endzapfen 19, an den Deckel 21 mit einer zwischen ihnen angeordneten Kurvenscheibe 22 (vgl. Fig. 1) angeschraubt sind. Die Kurvenscheibe 22 ist an einen Gaszug 23 angeschlossen, der in einem Gaszughalter 24 angeordnet ist. Der Gaszughalter 24 lagert in einem vorkragenden Tragarm, der gleichzeitig als das Gehäuse 3 - nach dem Einsetzen des Schieberteils - verschließender Deckel 25 ausgebildet ist. Auf den Endzapfen ist eine Buchse 26 aufgeschoben und mittels einer Schraube 27 drehfest mit dem Endzapfen 19 verbunden. Eine auf der Buchse 26 angeordnete Drehfeder 28 ist mit einem Schenkel im Gehäusedeckel 25 und mit dem anderen Schenkel in einem Deckel 21 der Kurvenscheibe 22 eingerastet. Die Drehfeder 28 stellt bei entlastetem Gaszug 23 den Schieber 4 stets in seine Ausgangslage zurück. An seiner linken Seite weist das Schieberteil 2 ein als Halbzapfen 29 mit einer in der Ebene der Längsachse 5 verlaufenden Abflachung 31 ausgebildetes Zapfenende auf und ist außerdem mit einer Anlageschulter 32 versehen. An dem von der Kurvenscheibe 22 entfernten Ende ist direkt auf dem Schieber 4 ein Drehpotentiometer 30 angeordnet, so daß sich jede Schieberbewegung - und damit jede Schieberstellung - spielfrei, ohne ein Zwischenglied, auf das Potentiometer überträgt (vgl. Fig. 1).

Abgesehen von dem Endzapfen 19 entspricht das Schieberteil 1 des gemäß Fig. 1 zweiteiligen Schiebers 4 dem in der Ebene der Längsachse 5 um 180° verschwenkten Schieberteil 2 gemäß Fig. 3. Demgemäß besitzt das Schieberteil 1 an seiner rechten Seite einen eine Abflachung 31 aufweisenden Halbzapfen 33 und eine Anlageschulter 32. Die Bauweise mit sich zu einem zylindrischen Bund komplementierenden Halbzapfen 29, 33, deren Abflachungen 31 nach dem Zusammenfügen der beiden Schieberteile 1, 2 aufeinanderliegen, ermöglicht es, den zweiteiligen Schieber 4 in der Mitte zu lagern und dabei für das außerdem von einem Distanzring 34 umschlossene Lager 35 den Durchmesser des Schiebers 4 einzuhalten. Somit läßt sich der weiterhin an seinen Enden mit in Distanzringen 34 angeordneten Lagern 35 versehene Schieber 4 durch einfaches Einschieben in das Gehäuse 3 einbauen.

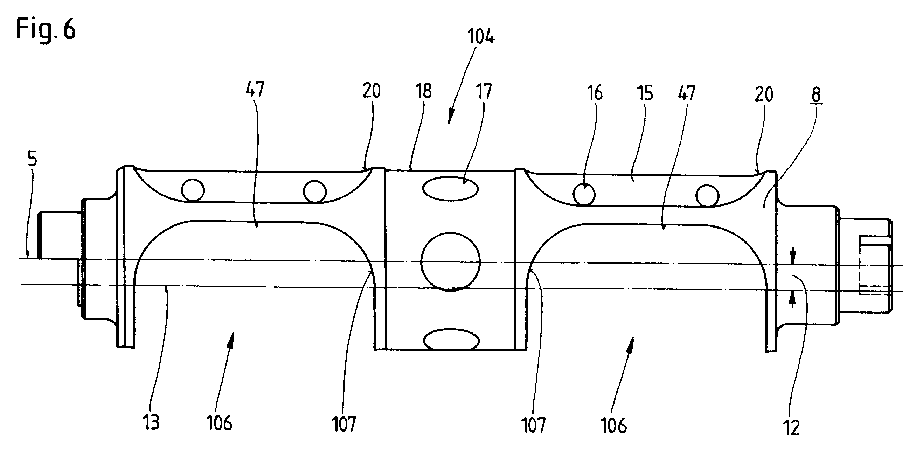

Der in Fig. 6 dargestellte Schieber bzw. das Schieberteil 104 unterscheidet sich von dem zuvor beschriebenen Schieber 4 lediglich durch die anders ausgebildeten Luftdurchtrittsöffnungen; es sind nämlich die die Queröffnungen 106 bildenden Langlöcher 107 tunnelartig ausgenommen, d.h. sie weisen keine Nasen (vgl. die Bezugsziffer 11 in Fig. 3) mehr auf.

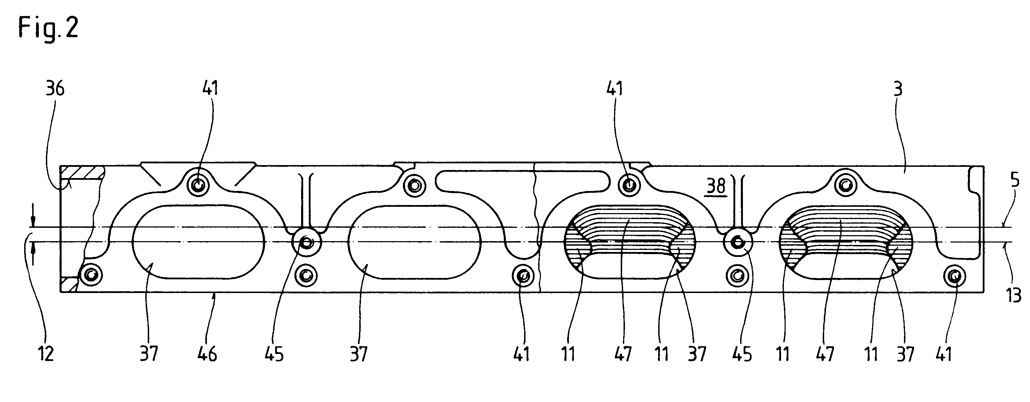

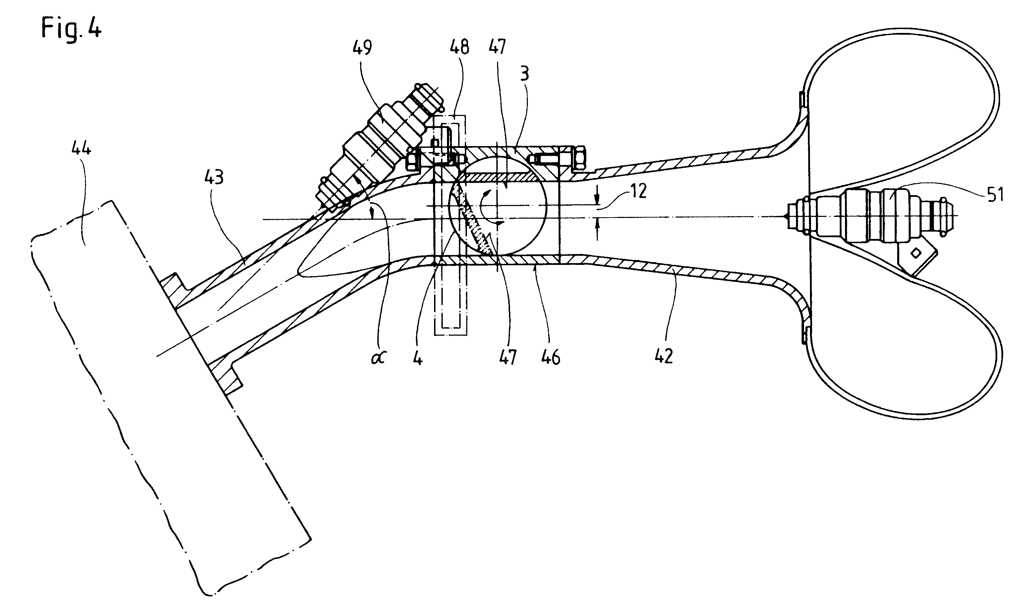

Das in Fig. 2 als Einzelheit dargestellte Gehäuse 3 besitzt eine dem Durchmesser des Schiebers 4 entsprechende Durchgangsbohrung 36 und an seinen mit den den Langlöchern 7 des Schiebers 4 zugeordneten, bezogen auf die Längsachse 5 ebenfalls außermittigen Ovalöffnungen 37 versehenen Wänden 38, 39 Stehbolzen 41, auf die Saugtrichter 42 und Saugrohre 43 aufgesteckt und mit dem Schiebergehäuse 3 verbunden werden (vgl. Fig. 4). Zur Abstützung und Befestigung des Gehäuses 3 samt Schieber 4 am nicht dargestellten Motor - in Fig. 4 ist strichpunktiert ein Zylinderkopf 44 schematisch dargestellt - ist das Gehäuse 3 außerdem mit Angußzapfen 45 versehen, an die zum Motor führende Stützbügel befestigt werden können.

Die Gehäusewand 38 und die darin angeordneten, mit den Langlöchern 7 des Schiebers 4 deckungsgleichen Ovalöffnungen 37 sind den Saugtrichtern 42 und die fluchtend zu den Ovalöffnungen 37 mit entsprechenden Ovalöffnungen versehene, zur Wand 38 parallele Gehäusewand 39 ist den Saugrohren 43 zugewandt; die Saugrohre 43 sind am Zylinderkopf 44 des Motors angeflanscht (vgl. Fig. 4). Die außermittigen Ovalöffnungen 37 des Gehäuses 3 (vgl. in Fig. 2 die - wie beim Schieber 4 - um das Versatzmaß 12 zur Längsachse 5 außermittige Öffnungsachse 13) und die außermittigen Queröffnungen 6 bzw. Langlöcher 7 des Schiebers 4 sind aufeinander abgestimmt und ergänzen sich. In der voll geöffneten Lage des Schiebers 4 ergeben sich glatte Durchgänge und völlig freie, d.h. vom Schieber 4 nicht unterbrochene Öffnungsquerschnitte, wie für die beiden in der linken Hälfte von Fig. 2 angeordneten Ovalöffnungen 37 dargestellt; in der voll geöffneten Lage liegen nämlich die Queröffnungen 6 bzw. Langlöcher 7 des Schiebers 4 in einer Flucht mit den Ovalöffnungen 37 in den Wänden 38, 39 des Gehäuses 3. Der im Bereich der Langlöcher 7 nicht durchbrochene Mantelabschnitt des Schiebers 4 taucht in der voll geöffneten Stellung ganz in den in Fig. 2 oberhalb der Ovalöffnungen 37 vorhandenen Halbmond (bzw. Halbschale) des Gehäuses 3 ein. Die Nasen 11 des Schiebers (vgl. Fig. 3) werden von einer Längsrille aufgenommen, die sich in der dem Halbmond gegenüberliegenden Gehäusewand 46 in der Mitte durch das gesamte Gehäuse erstreckt; sie ergibt sich bei der Bearbeitung der Bohrung aufgrund der Deachsierung von Schieber und Langloch.

In der rechten Hälfte der ein für vier Zylinder geeignetes Schiebergehäuse 3 darstellenden Fig. 2 ist für die beiden dort angeordneten Ovalöffnungen 37 eine Zwischenstellung des Schiebers 4 dargestellt. Der über die an der Gehäusewand 38 befestigten Saugtrichter 42 (vgl. Fig. 4) einströmenden Luft ist die schräg nach hinten, d.h. zur Gehäusewand 39 verlaufende - was der Zeichnung nicht zu entnehmen ist - Bohrungswand 47 des geraden Abschnitts 9 der Langlöcher 7 zugewandt; ansonsten ragen lediglich noch die - mit besonders strömungsgleitenden Konturen versehenen - Nasen 11 des Schiebers in den freien Querschnitt hinein. Der Luftwiderstand ist somit außerordentlich verringert, und aufgrund der schrägen Lage der Bohrungswände 47 wird die einströmende Luft gezielt in die sich in Strömungsrichtung anschließenden Saugrohre 43 bzw. Zylinder geleitet.

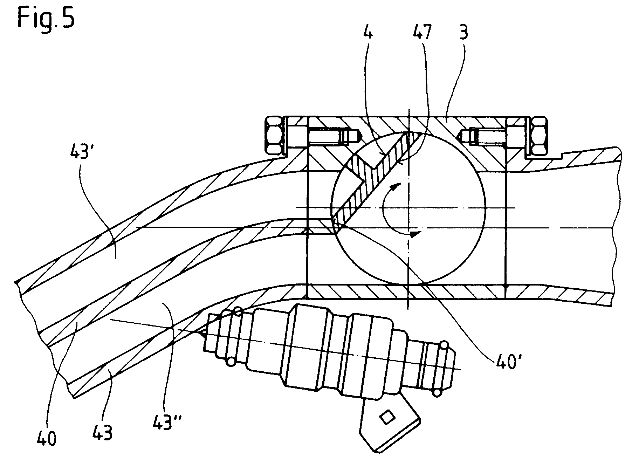

Bei der Ausführung gemäß Fig. 5 ist das Saugrohr 43 als sogenanntes Schaltsaugrohr ausgebildet und zu diesem Zweck durch eine Mittenwand 40 in horizontaler Ebene unterteilt; es besitzt somit voneinander getrennte Kanäle 43', 43''. In der dargestellten Ausgangslage verschließt der Schieber 4 mit seiner Bohrungswand 47 den in der Zeichnungsebene oberen Kanal 43', während hingegen der untere Kanal 43'' voll geöffnet ist; da der nicht dargestellte Zylinder der Brennkraftmaschine somit zumindest über den unteren Kanal 43'' mit Luft versorgt wird, befindet sich das Einspritzventil 49 am Kanal 43''. Wenn höhere Drehzahlen auftreten und eine größere Füllung der Zylinder erfordern, wird der Schieber 4 - elektronisch gesteuert - in der Zeichnung nach rechts gedreht und im gewünschten Maße der Kanal 43' zusätzlich geöffnet und damit der Luftversorgung zugeschaltet. Die Mittenwand 40 ist um ihre Längsachse gedrallt, so daß ihre von dem Schieber 4 entfernte - nicht dargestellte - Stirnwand gegenüber der schieberseitigen Stirnwand 40' um 90° gedreht ist; sie mündet damit exakt zwischen den beiden im Zylinder nebeneinanderliegend angeordneten Ventilen.

Wie in der Einbaulage gemäß Fig. 4 dargestellt ist, ergibt sich in der mit durchgezogenen Linien dargestellten Lage der Bohrungswand 47 des Schiebers 4 ein von den Saugtrichtern 42 über das Gehäuse 3 und die Saugrohre 43 bis in den Zylinderkopf 44 reichender freier Durchgang mit gleicher (nämlich ovaler) Form des Saugkanals. Die durch den Schieber 4 völlig geschlossene Lage des Saugkanals wird durch die strichpunktierte Position der Bohrungswand 47 verdeutlicht, die die den Saugrohren 43 in den Gehäusewänden 39 zugewandten Ovalöffnungen 37 verschließt, wozu der Schieber 4 durch Betätigung des Gaszuges 23 (vgl. Fig. 1) entsprechend verdreht worden ist.

Schließlich ist in Fig. 4 der gegenüber dem erfindungsgemäß zylindrischen Schieber bei einem Flachschieber sehr viel größere, insbesondere in der Höhe erhebliche Platzbedarf durch ein - verhältnisgetreu - strichpunktiert eingezeichnetes Flachschieber-Gehäuse 48 verdeutlicht. Aufgrund der großen Bauhöhe des Flachschieber-Gehäuses 48 ist es dort nicht möglich, die Einspritzdüsen 49 mit einem solch kleinen Einstellwinkel α anzuordnen, wie das bei der Erfindung der Fall ist, die eine flache Einbaulage der Einspritzdüsen 49 ermöglicht, bei der die Düsen direkt in den Brennraum der Zylinder gerichtet sind. Zur besseren Gemischverteilung sind gemäß der in Fig. 4 dargestellten Ausführung Spritzdüsen 51 auch an den Saugtrichtern 42 angeordnet. Die Bauhöhe des Flachschieber-Gehäuses 48 verhindert eine ähnlich flache Anbringung der Spritzdüsen 49, so daß diese sich nicht in den Brennraum richten lassen, und schließt es außerdem aus, die Düsen näher an den Schieber zu verlegen.

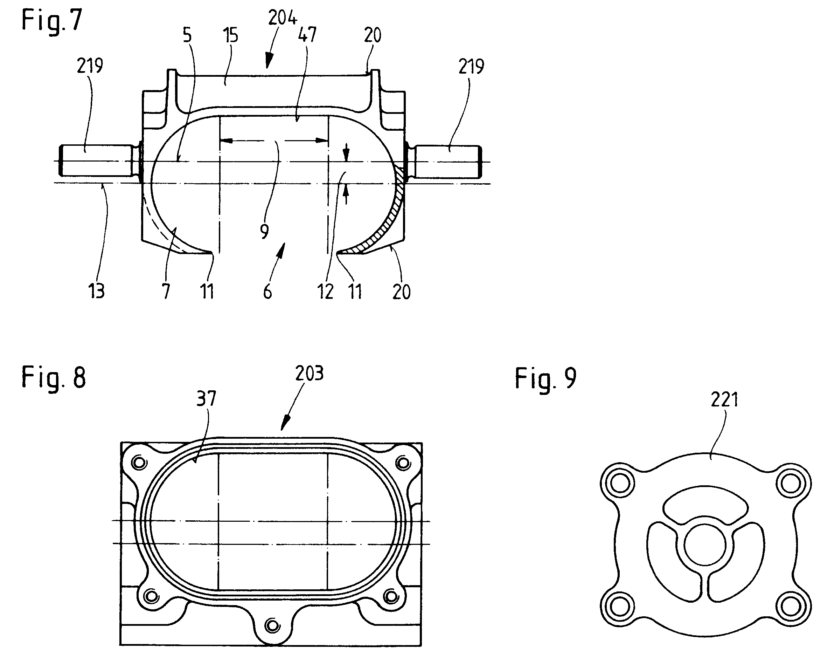

In Fig. 7 ist ein für sich in der gezeigten Ausführung nicht unter den Hauptanspruch fallender Schieber 204 dargestellt, der sich von dem Schieber 4 bzw. den diesen bildenden Schieberteilen 1, 2 im wesentlichen nur dadurch unterscheidet, daß er mit lediglich einer außermittigen Queröffnung 6 versehen ist, die an ihrer von der außermittigen Öffnungsachse 13 weniger entfernten Kreisbogenseite offen ist. Der Schieber 204 läßt sich einem Zylinder im Zylinderkopf einer Brennkraftmaschine individuell zuordnen, wozu er in das in Fig. 8 dargestellte, abweichend von dem Gehäuse gemäß Fig. 2 entsprechend lediglich eine Ovalöffnung 37 aufweisende Einzelgehäuse 203 eingesetzt wird. Der Schieber 204 lagert dort mit seinen Endzapfen 219 in zu diesem Zweck mit Lagern versehenen, auf die offenen Stirnseiten des Gehäuses 203 aufgeschraubten, nicht dargestellten Deckeln. An der der Kurvenscheibe abgewandten Gehäuseseite ist auf den Gehäusedeckel ein in Fig. 9 dargestellter Kalter 221 für das Drehpotentiometer aufgesetzt. Die Einzelgehäuse 203 können in beliebiger, von den im Zylinderkopf vorhandenen Zylindern vorgegebener Zahl aneinandergereiht werden.

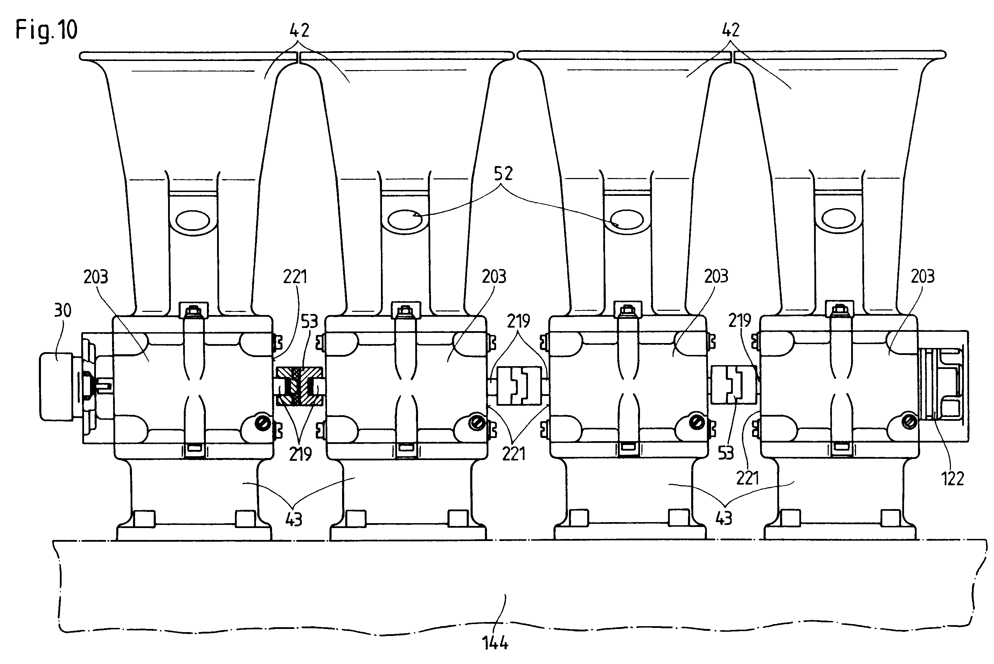

Bei der Ausführung gemäß Fig. 10 weist ein Zylinderkopf 144 an dieser Seite eines nicht näher dargestellten Motors vier über Saugrohre 43 mit dem Zylinderkopf 144 verbundene Einzelgehäuse 203 mit darin angeordneten Schiebern 204 auf; an der von dem Zylinderkopf 144 entfernten Seite sind die Gehäuse 203 mit - außerdem Aufnahmen 52 für Spritzdüsen aufweisenden - Saugtrichtern 42 verschraubt. Der Abstand zwischen zwei benachbarten Einzelgehäusen 203 wird mittels Kupplungen 53 überbrückt, die auf den Endzapfen 219 der Schieber 204 angeordnet sind und beliebige Abstände zwischen den Einzelgehäusen 203 überbrücken können; die Einzelgehäuse 203 ermöglichen somit eine variable, an die jeweiligen Abstände der Zylinder einfach anzupassende Bauweise einer Schieberanlage. Die in den Fig. 7 und 8 gezeigten Abwandlungen eines in Form von Einzelschiebern ausgebildeten Schiebers fallen dann unter die Ausführungsform gemäß dem Anspruch 1, wenn mehrere Einzelschieber aneinandergereiht werden, denn schon bei zwei einen Schieber bildenden Einzelschiebern ergeben sich insgesamt vier Lagerstellen oder, wenn sich bei aneinandergereihten Einzelschiebern eine Lagerung auch an der Verbindungsstelle zweier Einzelschieber befindet. An jeweils einem Ende der aus Einzelgehäusen 203 zusammengesetzten Schieberanlage ist auf den aus dem Gehäuse vorkragenden Endzapfen 219 ein Drehpotentiometer 30 (vgl. in Fig. 10 das linke Ende der Schieberanlage) aufgesetzt, während am anderen Ende auf dem vorkragenden Endzapfen 219 eine Kurvenscheibe 122 für einen darin anzuschließenden Gaszug (vgl. diesbezüglich das rechte Ende von Fig. 3) angeordnet ist. Das die Kurvenscheibe 122 mit dem Gaszug aufweisende Ende eines Einzelgehäuses 203 läßt sich zudem mit einem Vollast- und einem Leerlaufanschlag versehen.

## Patentansprüche

1. Brennkraftmaschine mit einem zylindrischen und mit, bezogen auf seine Längsachse (5), mindestens einer außermittigen Queröffnung (6, 7) versehenen Schieber zum Regeln insbesondere der den Zylindern zuströmenden Luftmenge, wobei der Mantel (8) des Schiebers (4) an der von der außermittigen Öffnungsachse (13) weniger entfernten Kreisbogenseite unterhalb der Queröffnungen (6, 7) offen ist, gekennzeichnet durch taschenartige Vertiefungen (20) in der Mantelfläche (8) und eine mindestens dreifache Lagerung des Schiebers (4).

2. Brennkraftmaschine nach Anspruch 1, dadurch gekennzeichnet, daß bei Langlöchern (7) als Queröffnung (6) der Mantel (8) des Schiebers (4, 204) entsprechend der Länge des geraden Abschnitts (9) der Langlöcher (7) offen ist.

3. Brennkraftmaschine nach Anspruch 1, dadurch gekennzeichnet, daß bei Langlöchern (107) als Queröffnungen (106) der Mantel (8) des Schiebers (104) auf der gesamten Länge der Langlöcher (7) offen ist (Tunnelkanal).

4. Brennkraftmaschine nach einem oder mehreren der Ansprüche 1 bis 3, dadurch gekennzeichnet, daß der Schieber (4, 104, 204) in einem korrespondierenden, bezogen auf die Längsachse (5) zumindest eine außermittige Durchlaßöffnung (37) aufweisenden, am Zylinderkopf (44) angeflanschten Gehäuse (3, 203) angeordnet ist.

5. Brennkraftmaschine nach Anspruch 4, dadurch gekennzeichnet, daß das Gehäuse (3, 203) zwischen Saugtrichtern (42) und mit dem Zylinderkopf (44) verschraubten Saugrohren (43) angeordnet ist.

6. Brennkraftmaschine nach Anspruch 4, dadurch gekennzeichnet, daß ein Einzelgehäuse (203) mit Schieber (204) direkt vor dem Zylinderkopf angeordnet ist.

7. Brennkraftmaschine nach einem oder mehreren der Ansprüche 1 bis 3, dadurch gekennzeichnet, daß der Schieber (4, 104, 204) im Zylinderkopf (44) angeordnet ist.

8. Brennkraftmaschine nach einem oder mehreren der Ansprüche 1 bis 3, dadurch gekennzeichnet, daß der Schieber (4, 104, 204) hinter den Zylinder-Auslaßkanälen angeordnet ist.

9. Brennkraftmaschine nach Anspruch 8, dadurch gekennzeichnet, daß der Schieber (4, 104, 204) im Auspuffkrümmer angeordnet ist.

10. Brennkraftmaschine nach Anspruch 8, dadurch gekennzeichnet, daß der Schieber (4, 104, 204) auslaßseitig im Zylinderkopf (44) angeordnet ist.

11. Brennkraftmaschine nach einem oder mehreren der Ansprüche 1 bis 10, dadurch gekennzeichnet, daß der Schieber (4, 104) mindestens dreifach gelagert ist.

12. Brennkraftmaschine nach einem der Ansprüche 1 bis 11, dadurch gekennzeichnet, daß der Schieber (4, 104) mehrteilig ist.

13. Brennkraftmaschine nach Anspruch 12, gekennzeichnet durch eine Lagerung (35) an der Verbindungsstelle zweier Schieberteile (1, 2).

14. Brennkraftmaschine nach Anspruch 12 oder 13, gekennzeichnet durch Lager (35) aus Kunststoff.

15. Brennkraftmaschine nach einem oder mehreren der Ansprüche 1 bis 14, dadurch gekennzeichnet, daß der Schieber(4, 104, 204) und das Gehäuse (3, 203) aus Kunststoff-Spritzguß, Magnesium-Spritzguß oder Kohlefaser bestehen.

16. Brennkraftmaschine nach einem oder mehreren der Ansprüche 1 bis 7 und 9 bis 15, dadurch gekennzeichnet, daß eine mit einem Endzapfen (16) des Schiebers (4, 104, 204) verbundene Kurvenscheibe (22, 122) an einen Gaszug (23) angeschlossen ist.

17. Brennkraftmaschine nach einem oder mehreren der Ansprüche 1 bis 8 und 12 bis 16, dadurch gekennzeichnet, daß ein Ende des Schiebers (4, 104, 204) mit einem Drehpotentiometer (30) versehen ist.

18. Brennkraftmaschine nach einem oder mehreren der Ansprüche 1 bis 8 und 12 bis 17, dadurch gekennzeichnet daß die sich dem Schieber (4, 104, 204) anschließenden Saugrohre (43) in horizontaler Ebene durch eine Mittenwand (40) unterteilt sind.

19. Brennkraftmaschine nach Anspruch 18, dadurch gekennzeichnet, daß die Mittenwand (40) um ihre Längsachse gedrallt und ihre von dem Schieber (4, 104, 204) entfernte Stirnwand gegenüber der schieberseitigen Stirnwand (40) um 90° gedreht ist.

## Claims

1. Internal combustion engine comprising a cylindrical slide valve for controlling the cylinder air intake, wherein said slide valve has at least one transverse port (6, 7) arranged eccentrically in relation to the longitudinal axis (5) of said slide valve, and wherein the jacket (8) of said slide valve (4) is open below said transverse ports (6, 7) on the circular arc side less remote from the eccentric port axis (13), **characterized in that** there are provided pocket-like recesses (20) in the jacket surface (8) and that the slide valve (4) is supported in at least three hearings.

2. Internal combustion engine as set forth in Claim 1, **characterized in that** with elongated openings (7) defining the transverse port (6), the jacket (8) of said slide valve (4, 204) is open over a length corresponding to that of the straight section (9) of said elongated openings (7).

3. Internal combustion engine as set forth in Claim 1, **characterized in that** with elongated openings (107) defining the transverse ports (106), the jacket (8) of said slide valve (104) is open over the entire length of said elongated openings (7) (tunnel port).

4. Internal combustion engine as set forth in one or more of Claims 1 through 3 , **characterized in that** the slide valve (4, 104, 204) is mounted in a corresponding housing (3, 203) secured to the cylinder head (44) via a flange, said housing comprising at least one through-passage (37) located eccentrically in relation to the longitudinal axis (5).

5. Internal combustion engine as set forth in Claim 4, **characterized in that** said housing (3, 203) is arranged between velocity stacks (42) and intake pipes (43) screwed to the cylinder head (44).

6. Internal combustion engine as set forth in Claim 4, **characterized in that** an individual housing (203) with slide valve (204) is arranged directly before the cylinder head.

7. Internal combustion engine as set forth in one or more of Claims 1 through 3, **characterized in that** the slide valve (4, 104, 204) is arranged in the cylinder head (44).

8. Internal combustion engine as set forth in one or more of Claims 1 through 3, **characterized in that** the slide valve (4, 104, 204) is arranged behind the cylinder outlet ports.

9. Internal combustion engine as set forth in Claim 8, **characterized in that** the slide valve (4, 104, 204) is arranged in the exhaust manifold.

10. Internal combustion engine as set forth in Claim 8, **characterized in that** the slide valve (4, 104, 204) is located on the outlet side in the cylinder head (44).

11. Internal combustion engine as set forth in one or more of Claims 1 through 10, **characterized in that** the slide valve (4, 104) is supported in at least three bearings.

12. Internal combustion engine as set forth in any of Claims 1 through 11, **characterized in that** the slide valve (4, 104) is in several parts.

13. Internal combustion engine as set forth in Claim 12, **characterized in that** one bearing (35) is arranged at the joint between two slide valve parts (1, 2).

14. Internal combustion engine as set forth in any of Claims 12 or 13, **characterized in that** a plurality of said bearings (35) are made of plastic.

15. Internal combustion engine as set forth in one or more of Claims 1 through 14, **characterized in that** the slide valve (4, 104, 204) and its housing (3, 203) are made of injection-moulded plastic, injection-moulded magnesium, or carbon fibre.

16. Internal combustion engine as set forth in one or more of Claims 1 through 7 and 9 through 15, **characterized in that** a cam disc (22, 122) is linked to a pin (16) provided at the end of the slide valve (4, 104, 204), said cam disc being connected to a throttle control cable (23).

17. Internal combustion engine as set forth in one or more of Claims 1 through 8 and 12 through 16, **characterized in that** one end of the slide valve (4, 104, 204) is connected to a rotary potentiometer (30).

18. Internal combustion engine as set forth in one or more of Claims 1 through 8 and 12 through 17, **characterized in that** the intake pipes (42) connected to the slide valve (4, 104, 204) on its downstream side are separated by a central partition (40) in their horizontal plane.

19. Internal combustion engine as set forth in Claim 18, **characterized in that** said partition (40) is twisted along its longitudinal axis, and that its front face remote from the slide valve (4, 104, 204) is rotated through 90 degrees compared with its front face (40) on the slide valve side.

## Revendications

1. Moteur à combustion interne, comprenant un coulisseau cylindrique doté d'au moins une ouverture transversale (6, 7) située en position non centrale par rapport à son axe longitudinal (5), pour régler en particulier la quantité d'air admise vers les cylindres, l'enveloppe (8) du coulisseau (4) étant ouverte au-dessous des ouvertures transversales (6, 7) du côté de l'arc de cercle qui est le moins éloigné de l'axe (13) non central des ouvertures, caractérisé par des ouvertures (20) en forme de poche dans la surface enveloppe (8), et par le fait que le coulisseau (4) est monté par au moins trois portées.

2. Moteur à combustion interne selon la revendication 1, caractérisé en ce que lorsque l'ouverture transversale (6) est formée par des trous oblongs (7), l'enveloppe (8) du coulisseau (4, 204) est ouverte suivant la longueur du tronçon rectiligne (9) des trous oblongs (7).

3. Moteur à combustion interne selon la revendication 1, caractérisé en ce que lorsque l'ouverture transversale (106) est formée par des trous oblongs (107), l'enveloppe (8) du coulisseau (104) est ouverte sur la longueur totale des trous oblongs (7) (conduit - tunnel).

4. Moteur à combustion interne selon l'une ou plusieurs des revendications 1 à 3, caractérisé en ce que le coulisseau (4, 104, 204) est agencé dans un boîtier (3, 203) correspondant, bridé sur la tête de cylindre (44), qui comporte au moins une ouverture de passage (37) non centrée par rapport à l'axe longitudinal (5).

5. Moteur à combustion interne selon la revendication 4, caractérisé en ce que le boîtier (3, 203) est agencé entre des entonnoirs d'aspiration (42) et des tubes d'aspiration (43) vissés à la tête de cylindre (44).

6. Moteur à combustion interne selon la revendication 4, caractérisé en ce qu'un boîtier individuel (203) avec coulisseau (204) est agencé directement devant la tête de cylindre.

7. Moteur à combustion interne selon l'une ou plusieurs des revendications 1 à 3, caractérisé en ce que le coulisseau (4, 104, 204) est agencé dans la tête de cylindre (34).

8. Moteur à combustion interne selon l'une ou plusieurs des revendications 1 à 3, caractérisé en ce que le coulisseau (4, 104, 204) est agencé derrière les conduits de sortie du cylindre.

9. Moteur à combustion interne selon la revendication 8, caractérisé en ce que le coulisseau (4, 104, 204) est agencé dans le coude d'échappement.

10. Moteur à combustion interne selon la revendication 8, caractérisé en ce que le coulisseau (4, 104, 204) est agencé du côté sortie dans la tête de cylindre (34).

11. Moteur à combustion interne selon l'une ou plusieurs des revendications 1 à 10, caractérisé en ce que le coulisseau (4, 104) est monté par l'intermédiaire d'au moins trois portées.

12. Moteur à combustion interne selon l'une quelconque des revendications 1 à 11, caractérisé en ce que le coulisseau (4, 104) est réalisé en plusieurs parties.

13. Moteur à combustion interne selon la revendication 12, caractérisé par une portée (35) à l'emplacement de liaison de deux parties du coulisseau (1, 2).

14. Moteur à combustion interne selon l'une ou l'autre des revendications 12 ou 13, caractérisé par des portées (35) en matière plastique.

15. Moteur à combustion interne selon l'une ou plusieurs des revendications 1 à 14, caractérisé en ce que le coulisseau (4, 104, 204) et le boîtier (3, 203) sont réalisés par moulage sous injection de matière plastique, par moulage sous injection de magnésium, ou en fibres de carbone.

16. Moteur à combustion interne selon l'une ou plusieurs des revendications 1 à 7 et 9 à 15, caractérisé en ce qu'un disque de came (22, 122) relié à un tenon terminal (16) du coulisseau (4, 104, 204) est relié à une tirette à gaz (23).

17. Moteur à combustion interne selon l'une ou plusieurs des revendications 1 à 8 et 12 à 16, caractérisé en ce qu'une extrémité du coulisseau (4, 104, 204) est pourvue d'un potentiomètre rotatif (30).

18. Moteur à combustion interne selon l'une ou plusieurs des revendications 1 à 8 et 12 à 17, caractérisé en ce que les tubes d'aspiration (43) qui se raccordent au coulisseau (4, 104, 204) sont subdivisés dans un plan horizontal par une paroi médiane (40).

19. Moteur à combustion interne selon la revendication 18, caractérisé en ce que la paroi médiane (40) est vrillée autour de son axe longitudinal, et en ce que sa paroi frontale éloignée du coulisseau (4, 104, 204) est tournée de 90° par rapport à la paroi frontale (40) côté coulisseau.
